# EUROPEAN PATENT SPECIFICATION

(11) **EP 3 929 034 B1**
(45) Date of publication and mention of the grant of the patent: **05.07.2023**
(21) Application number: 21179361.7
(22) Date of filing: 14.06.2021
(51) Int. Cl.: B60Q 1/26, F21S 43/14, F21S 43/15, F21S 43/239, F21S 43/241, F21S 43/243, F21S 43/249, F21S 43/40

(54) **VEHICLE LAMP WITH A LIGHT GUIDE**
FAHRZEUGLAMPE MIT EINEM LICHTLEITER
LAMPE DE VÉHICULE AVEC UN GUIDE DE LUMIÈRE

(30) Priority: 23.06.2020 JP 2020107563
(43) Date of publication of application: 29.12.2021
(73) Proprietor: STANLEY ELECTRIC CO., LTD., Tokyo 153-8636 (JP)
(72) Inventor: YOSHIWARA, Satoshi, Tokyo, 153-8636 (JP); NAGAFUCHI, Daisuke, Tokyo, 153-8636 (JP); YAMAMOTO, Tomoyuki, Tokyo, 153-8636 (JP)
(74) Representative: Schmidbauer, Andreas Konrad

(56) References cited:
- EP-A1- 2 824 385
- EP-A1- 3 248 840
- CN-U- 206 724 036
- DE-A1-102012 107 437
- DE-A1-102016 100 207
- FR-A1- 3 042 258
- JP-A- 2014 154 524

## Description

### BACKGROUND OF THE INVENTION

### Field of the Invention

The present invention relates to a vehicle lamp.

### Description of Related Art

In the related art, as a vehicle lamp mounted on a vehicle, a configuration in which a light source such as a light emitting diode (LED) or the like and a light guiding lens (a light guiding body) such as an inner lens or the like are combined is known.

In such a vehicle lamp, light emitted from the light source is incident on the light guiding lens from an incidence surface of the light guiding lens, and the light is emitted from the light emitting surface of the light guiding lens to the outside of the light guiding lens while the light is guided into the inside of the light guiding body. Accordingly, it is possible to make the light emitting surface of the light guiding lens emit light as the light emitting section of the vehicle lamp.

In addition, in the vehicle lamps in recent years, due to diversification of designs, light emitting surfaces of a light guiding lens are made to emit light by mutually switching the light from light sources having different colored lights (for example, see JP 2015-201278 A).

As a combination of such vehicle lamps, for example, there is a configuration in which taillights (tail lamps) configured to emit red light and direction indicators (turn lamps) configured to emit orange light are combined as vehicle lamps mounted on both corner sections on the side of a rear end of the vehicle, a configuration in which width indicators (position lamps) configured to emit white light and direction indicators (turn lamps) configured to emit orange light are combined as vehicle lamps mounted on both corner sections on the side of a front end of the vehicle, or the like.

FR 3 042 258 A discloses an optical element made of transparent or translucent material capable of producing a light beam and comprising a first entry face for light rays produced by a first light source, a first reflection face for reflecting light rays coming from the first entry face, a second entry face of light rays produced by a second light source, a second reflection face for reflecting light rays coming from the second entry face, and a common output face. The light rays coming from the first reflection face and from the second reflection face propagate in the same direction towards one or more reflection faces of said rays towards the exit face.

CN 206 724 036 U discloses a beam adjusting device and optical components. This beam adjusting device includes: an optical fiber penetrate portion for receiving a first light beam, one or a plurality of first light beam deflection faces arranged for deflecting the first light beam via optical fiber penetrate portion incident, a second optical fiber penetrate portion for receiving a second light beam, one or a plurality of second light beam deflection faces arranged for deflecting the second light beam via the incident of the second optical fiber penetrate portion, and a light-emitting face which has one or a plurality of first light beam outgoing regions and one or a plurality of second light beam outgoing regions. This beam adjusting device can realize at least two kinds of light beams outgoing separately, with respective light functions according to a required outgoing position.

### SUMMARY OF THE INVENTION

Incidentally, in a case the light emitting surface of the light guiding lens is caused to emit light by the lights from the different light sources with the different colored lights as described above, there is a need to separately dispose the light sources having different colored lights and to guide the lights in the same direction with each other after the lights from the light sources having the different colored lights have entered from different positions of the light guiding lens.

For example, in the vehicle lamp disclosed in JP 2015-201278 A, the lights emitted from the light sources having the different colored lights with each other are emitted from the same light emitting surface of the light guiding lens by disposing the light sources having the different colored lights side by side at a position opposite to an incidence section of the light guiding lens.

However, in the vehicle lamp disclosed in JP 2015-201278 A, since the light guiding lens has an extended shape (a horizontally long shape) in a direction in which the light sources having the different colored lights are arranged side by side, there will be restrictions in freedom in designs of the light guiding lens. In addition, in the direction in which the light sources having the different colored lights are arranged side by side, since an interval in which the light sources having the same color are arranged becomes longer, an appearance at the time of lighting, such as occurrence of color irregularity or the like, also deteriorates.

An aspect of the present invention is directed to providing a vehicle lamp capable of improving an appearance of light emission when a light guiding body is caused to emit light by light incident from different positions in the light guiding body.

In order to accomplish the above-mentioned aspect, the present invention provides a vehicle lamp as set forth in claim 1.

Preferred embodiments of the present invention may be gathered from the dependent claims.

According to the aspect of the present invention, it is possible to provide a vehicle lamp capable of improving an appearance of light emission when a light guiding body is caused to emit light by light incident from different positions in the light guiding body.

### BRIEF DESCRIPTION OF THE DRAWINGS

FIG. 1 is a rear view of a vehicle including vehicle lamps according to an embodiment of the present invention.
FIG. 2 is a front view showing a configuration of the vehicle lamp shown in FIG. 1.
FIG. 3 is a cross-sectional view of the vehicle lamp along line segment A-A shown in FIG. 2.
FIG. 4 is a perspective view showing a light guiding body included in the vehicle lamp from the side of a front surface thereof.
FIG. 5 is a perspective view showing the light guiding body included in the vehicle lamp from the side of a back surface thereof.
FIG. 6 is a cross-sectional view showing an optical path of first light when a first light source of the vehicle lamp is turned on.
FIG. 7 is a cross-sectional view showing an optical path of second light when a second light source of the vehicle lamp is turned on.
FIG. 8(A) is a cross-sectional view showing an optical path of the first light emitted from a first light emitting surface and a second light emitting surface, and FIG. 8(B) is a cross-sectional view showing an optical path of the second light emitted from the first light emitting surface and the second light emitting surface.
FIG. 9 is a cross-sectional view showing a variant of the light guiding body.

### DETAILED DESCRIPTION OF THE INVENTION

Hereinafter, an embodiment of the present invention will be described in detail with reference to the accompanying drawings.

Further, in the drawings used in the following description, in order to make each component easier to see, a scale of a dimension may be shown differently depending on the components, and dimensional ratios or the like of the components are not always the same as the actual ones.

In addition, in the drawings described below, an XYZ orthogonal coordinate system is set, an X-axis direction is a forward/rearward direction (a lengthwise direction) of a vehicle lamp, a Y-axis direction is a leftward/rightward direction (a widthwise direction) of the vehicle lamp, and a Z-axis direction is an upward/downward direction (a height direction) of the vehicle lamp.

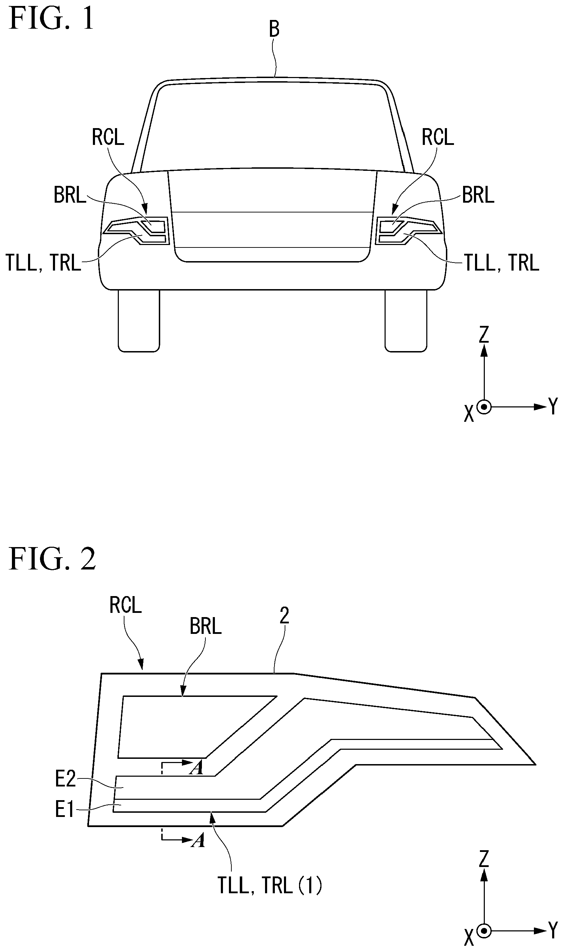

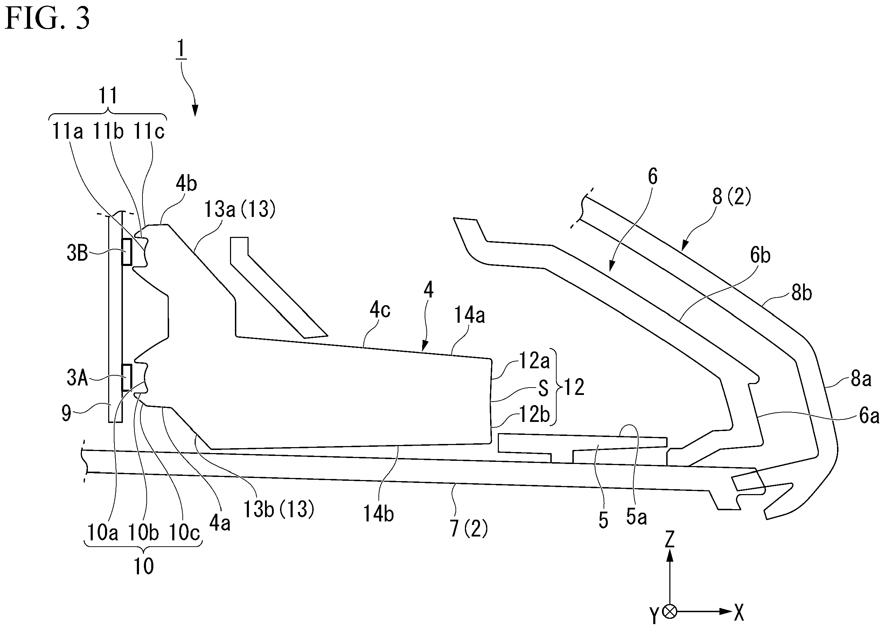

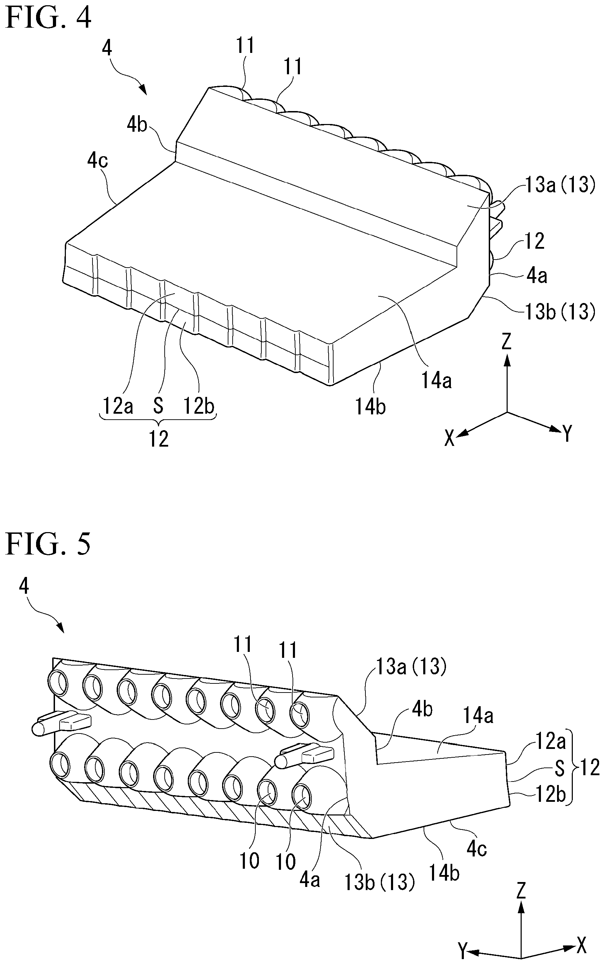

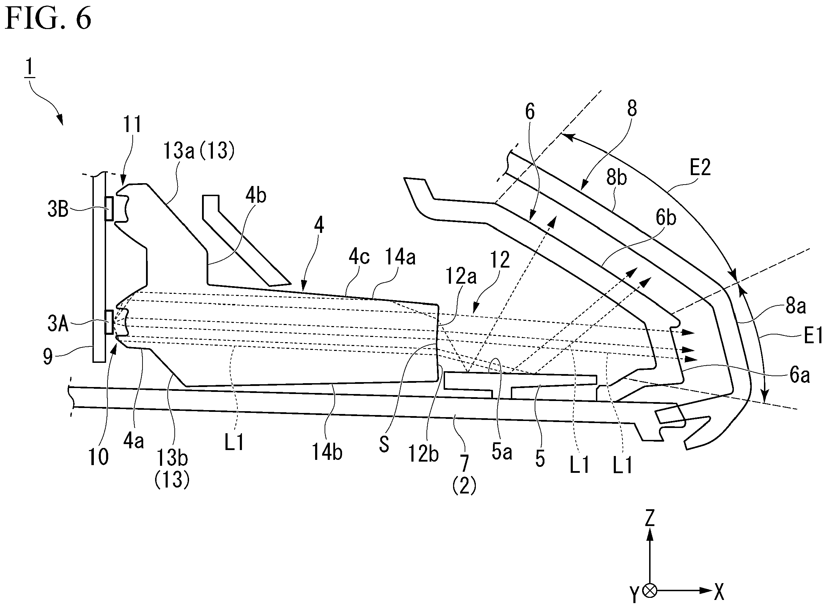

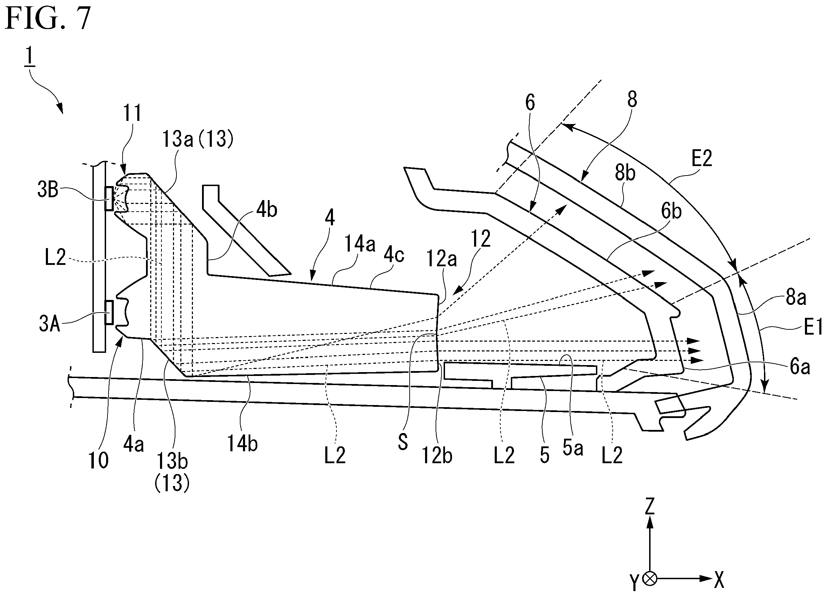

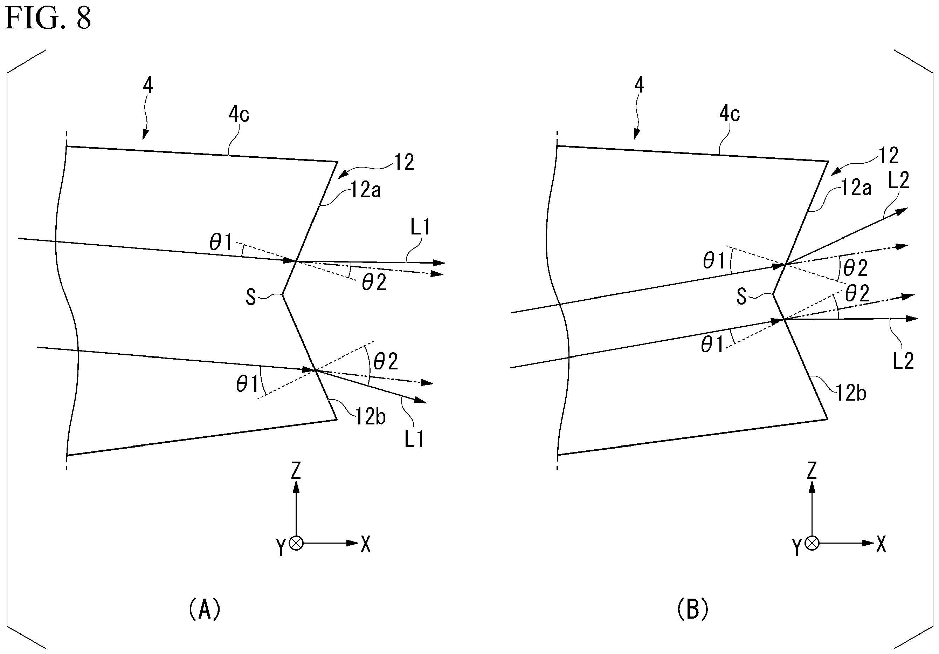

As the embodiment of the present invention, for example, a vehicle lamp 1 shown in FIG. 1 to FIG. 8 will be described. Further, FIG. 1 is a rear view of a vehicle B including the vehicle lamp 1. FIG. 2 is a front view showing a configuration of the vehicle lamp 1. FIG. 3 is a cross-sectional view of the vehicle lamp 1 along line segment A-A shown in FIG. 2. FIG. 4 is a perspective view showing a light guiding body 4 included in the vehicle lamp 1 from the side of a front surface thereof. FIG. 5 is a perspective view showing the light guiding body 4 included in the vehicle lamp 1 from the side of a back surface thereof. FIG. 6 is a cross-sectional view showing an optical path of first light L1 when a first light source 3A of the vehicle lamp 1 is turned on. FIG. 7 is a cross-sectional view showing an optical path of second light L2 when a second light source 3B of the vehicle lamp 1 is turned on. FIG. 8(A) is a cross-sectional view showing the optical path of the first light L1 emitted from a first light emitting surface 12a and a second light emitting surface 12b. FIG. 8(B) is a cross-sectional view showing the optical path of the second light L2 emitted from the first light emitting surface 12a and the second light emitting surface 12b.

As shown in FIG. 1 and FIG. 2, the vehicle lamp 1 of the embodiment constitutes each of rear combination lamps RCL mounted on both corner sections on the side of a rear end of the vehicle B.

Further, in FIG. 2, in the rear combination lamps RCL disposed laterally symmetrically in the rear section of the vehicle B, the rear combination lamp RCL disposed on the right side of the rear section is shown.

In addition, directions of forward, rearward, leftward, rightward, upward and downward in the following description are the same as directions when the vehicle lamp 1 is seen from a front surface (a rear side of the vehicle B) unless the context clearly indicates otherwise. Accordingly, the directions of forward, rearward, leftward and rightward thereof are opposite to the directions when the vehicle B is seen from a front surface (a front side of the vehicle B).

The rear combination lamp RCL has a tail lamp TLL configured to emit red light, a brake lamp (a stop lamp) BRL configured to emit red light, and a turn lamp TRL configured to emit orange light, as functional lamps.

The vehicle lamp 1 of the embodiment is obtained by applying the present invention to a combined tail and turn lamp in which the tail lamp TLL and the turn lamp TRL are combined.

Specifically, as shown in FIG. 3, the vehicle lamp 1 has a structure in which the plurality of (in the embodiment, eight) first light sources 3A, a plurality of (in the embodiment, eight) second light sources 3B, the light guiding body 4, a reflecting member 5 and a lens body 6 are disposed inside a lighting body 2.

The lighting body 2 is constituted by a housing 7 having a front side being opened, and a transparent lens cover (an outer lens) 8 configured to cover the opening of the housing 7. Further, a shape of the lighting body 2 can be appropriately changed according to the design or the like of the vehicle.

As shown in FIG. 4 and FIG. 6, the plurality of first light sources 3A are constituted by LEDs configured to emit orange light (hereinafter referred to as the first light L1) as light sources for a turn lamp. The plurality of first light sources 3A are mounted on a flat plate-shaped circuit board 9, on which a driving circuit configured to drive the LEDs is provided, on the side of a front surface thereof, in a state in which the first light sources 3A are arranged side by side in the widthwise direction of the vehicle lamp 1. Accordingly, the first light sources 3A radially emit the first light L1 forward.

As shown in FIG. 5 and FIG. 7, the plurality of second light sources 3B are constituted by LEDs configured to emit red light (hereinafter referred to as the second light L2) as light sources for a tail lamp. The plurality of second light sources 3B are disposed above the plurality of first light sources 3A and are mounted on the circuit board 9 on the front surface thereof, which is same as the first light source 3A, in a state in which the second light sources 3B are arranged side by side in the widthwise direction of the vehicle lamp 1. Accordingly, the second light sources 3B radially emit the second light L2 forward.

Further, while the configuration in which the plurality of LEDs that constitute the first light source 3A and the second light source 3B and a driving circuit configured to drive the plurality of LEDs are provided on the circuit board 9 is provided in the embodiment, a configuration in which a mounting board on which the plurality of LEDs are mounted and a circuit board on which a driving circuit configured to drive the plurality of LEDs is provided are disposed separately, the mounting board and the circuit board are electrically connected via a wiring cord referred to as a harness, and the driving circuit is protected from heat emitted from the plurality of LEDs may be provided.

As shown in FIG. 3 to FIG. 7, for example, the light guiding body 4 is formed of a transparent resin such as polycarbonate, acryl, or the like, or a light transmissive member such as glass or the like, as a light guiding lens. The light guiding body 4 has a first light guide section 4a disposed on the side closer to the first light source 3A, a second light guide section 4b disposed on the side closer to the second light source 3B, and a third light guide section 4c where the first light guide section 4a and the second light guide section 4b are connected.

The first light guide section 4a is a portion that guides the first light L1 emitted from the first light source 3A, and extends in a direction in which the plurality of first light sources 3A are arranged (the widthwise direction of the vehicle lamp 1). A side of the first light guide section 4a opposite to a side thereof facing the first light source 3A (a front side in the embodiment) is connected to a rear side of the third light guide section 4c (in the embodiment, a back surface of the third light guide section 4c).

The second light guide section 4b is a portion that guides the second light L2 emitted from the second light source 3B, and extends in a direction in which the plurality of second light sources 3B are arranged side by side (the widthwise direction of the vehicle lamp 1). A side of the second light guide section 4b opposite to a side thereof facing the second light source 3B (in the embodiment, a lower side of the second light guide section 4b) is connected to a lateral side of the third light guide section 4c (in the embodiment, a side of an upper surface of the third light guide section 4c).

The third light guide section 4c is a portion that guides the first light L1 and the second light L2, extends in the widthwise direction of the vehicle lamp 1 (the direction in which the first light sources 3A are arranged side by side), and protrudes forward from a position at which the first light guide section 4a and the second light guide section 4b are connected.

The light guiding body 4 has a plurality of (in the embodiment, eight) first incidence sections 10 located at a side of the first light guide section 4a which faces the first light source 3A (in the embodiment, a side of a back surface of the first light guide section 4a), a plurality of (in the embodiment, eight) second incidence sections 11 located at a side of the second light guide section 4b which faces the second light source 3B (in the embodiment, a side of a back surface of the second light guide section 4b), and a plurality of (in the embodiment, eight) emitting sections 12 located at a side of the third light guide section 4c which is opposite to a side of the third light guide section 4c to which the first light guide section 4a and the second light guide section 4b are connected (in the embodiment, a side of the front surface of the third light guide section 4c).

The plurality of first incidence sections 10 are provided to correspond to the plurality of first light sources 3A, respectively. Each of the first incidence sections 10 has a first condensing incidence surface 10a having a convex surface shape which is disposed at a center of the portion opposite to the first light source 3A and on which some of the first light L1 emitted from the first light source 3A enters, a second condensing incidence surface 10b which is disposed at an inner circumferential side of a protrusion protruding from a position surrounding the first condensing incidence surface 10a toward the first light source 3A and on which some of the first light L1 emitted from the first light source 3A enters, and a condensing reflecting surface 10c which is disposed at an outer circumferential side of the protrusion and which is configured to reflect the first light L1 entered from the second condensing incidence surface 10b.

Among the first incidence sections 10, in the first light L1 emitted from the first light source 3A, the first light L1 entered from the first condensing incidence surface 10a is condensed in the vicinity of an optical axis of the first light L1 emitted from the first light source 3A. Meanwhile, the first light L1 entered from the second condensing incidence surface 10b is condensed in the vicinity of the optical axis of the first light L1 emitted from the first light source 3A by reflecting the first light L on the condensing reflecting surface 10c. A reflecting section 13 includes the reflecting surface 10c which is disposed at the first light guide section 4a and which is configured to reflect the first light L1 entered from the first incidence sections 10 toward a connecting position between the third light guide section 4c and the reflecting surface 10cc.

Accordingly, in the first incidence sections 10, the first light L1 radially emitted from the first light source 3A is incident into the first light guide section 4a while parallelizing or condensing the first light L1. In addition, the first light L1 entered from the first incidence sections 10 is guided toward the third light guide section 4c on a forward side at inside of the first light guide section 4a. In addition, the first light L1 entered from the first light guide section 4a to the third light guide section 4c is guided toward the emitting sections 12 on the forward side.

The plurality of second incidence sections 11 are provided to correspond to the plurality of second light sources 3B, respectively. Each of the second incidence sections 11 has a first condensing incidence surface 11a having a convex surface shape which is disposed at a center of the portion opposite to the second light source 3B and on which some of the second light L2 emitted from the second light source 3B enters, a second condensing incidence surface 11b disposed at an inner circumferential side of a protrusion protruding from a position surrounding the first condensing incidence surface 11a toward the second light source 3B and on which some of the second light L2 emitted from the second light source 3B enters, and a condensing reflecting surface 11c which is disposed at an outer circumferential side of the protrusion and which is configured to reflect the second light L2 incident from the second condensing incidence surface 11b.

In the second incidence sections 11, among the second light L2 emitted from the second light source 3B, the second light L2 entered from the first condensing incidence surface 11a is condensed in the vicinity of the optical axis of the second light L2 which is emitted from the second light source 3B. Meanwhile, the second light L2 entered from the second condensing incidence surface 11b is condensed in the vicinity of the optical axis of the second light L2 which is emitted from the second light source 3B by reflecting the second light L2 with the condensing reflecting surface 11c. The reflecting section 13 includes the reflecting surface 11c which is disposed at the second light guide section 4b and which is configured to reflect the second light L2 entered from the second incidence sections 11 toward a connecting position between the third light guide section 4c and the reflecting surface 11c.

Accordingly, in the second incidence sections 11, the second light L2 which is radially emitted from the second light source 3B is caused to enter into the second light guide section 4b while parallelizing or condensing the second light L2. In addition, the second light L2 incident from the second incidence sections 11 is guided forward inside the second light guide section 4b.

The light guiding body 4 has the reflecting section 13 that includes at least one (in the embodiment, two) reflecting surfaces 13a and 13b configured to reflect one or both of the first light L1 which is guided at inside of the first light guide section 4a and the second light L2 which is guided at inside of the second light guide section 4b (in the embodiment, the second light L2 which is guided at inside of the second light guide section 4b) toward the third light guide section 4c.

The reflecting section 13 has the first reflecting surface 13a configured to reflect the second light L2 which has incident from the second incidence sections 11 toward the third light guide section 4c which is located at a downward side, and the second reflecting surface 13b configured to reflect the second light L2 reflected by the first reflecting surface 13a toward the emitting sections 12 which is located at a forward side.

The first reflecting surface 13a is constituted by an inclined surface disposed at a side of the second light guide section 4b which is opposite to the second incidence sections 11 (in the embodiment, a side of a front surface of the second light guide section 4b).

The second reflecting surface 13b is constituted by an inclined surface located at a side of the third light guide section 4c which is opposite to a position where the second light guide section 4b is connected with the third light guide section 4c. The second reflecting surface 13b is constituted as an inclined surface between the first incidence section 10 and a lower surface (a fourth reflecting surface 14b) of the third light guide section 4c. The second reflecting surface 13b is constituted by an inclined surface between the first light guide section 4a and a lower surface (the fourth reflecting surface 14b) of the third light guide section 4c. In addition, the second reflecting surface 13b is provided at a corner between a surface of the third light guide section 4c to which the first light guide section 4a is connected (a back surface of the third light guide section 4c) and a surface of the third light guide section 4c which is a surface opposite to a surface to which the second light guide section 4b is connected (a lower surface of the third light guide section 4c). The second reflecting surface 13b is provided at a corner between the first incidence section 10 and a lower surface (the fourth reflecting surface 14b) of the third light guide section 4c. The second reflecting surface 13b is provided at a corner between the first light guide section 4a and a lower surface (the fourth reflecting surface 14b) of the third light guide section 4c.

Accordingly, in the reflecting section 13, after the second light L2, which has been guided forward at inside the second light guide section 4b, has been reflected by the first reflecting surface 13a toward the third light guide section 4c which is located at a downward side, the second light L2, which has entered the third light guide section 4c from the second light guide section 4b, is reflected forward by the second reflecting surface 13b. In addition, the second light L2 reflected by the second reflecting surface 13b is guided at inside the third light guide section 4c toward the emitting sections 12 located at a forward side.

The plurality of emitting sections 12 are provided to correspond to each of the plurality of first light sources 3A and the plurality of second light sources 3B. Each of the emitting sections 12 has the first light emitting surface 12a and the second light emitting surface 12b that are disposed adjacent with each other while having a boundary line S, which is located between the first light L1 and the second light L2 that are guided inside of the third light guide section 4c, interposed between the first light emitting surface 12a and the second light emitting surface 12b.

The boundary line S extends in the widthwise direction of the emitting sections 12. The plurality of first light emitting surfaces 12a are disposed at one side that sandwich the boundary line S (in the embodiment, an upward side) and are arranged side by side in a direction along the boundary line S. Meanwhile, the plurality of second light emitting surfaces 12b are disposed at the other side that sandwich the boundary line S (in the embodiment, a downward side) and are arranged side by side in a direction along the boundary line S.

The first light emitting surface 12a and the second light emitting surface 12b are provided to be inclined toward the front with respect to the boundary line S in opposite directions with each other. That is, the first light emitting surface 12a and the second light emitting surface 12b constitute a V-shaped groove section using the boundary line S as a bottom section.

The third light guide section 4c reflects the first light L1 incident on a surface (in the embodiment, an upper surface) (hereinafter, referred to as a third reflecting surface) 14a, to which the second light guide section 4b is connected, toward the first light emitting surface 12a. For this reason, the third reflecting surface 14a is provided to be inclined diagonally downward.

Further, the entire upper surface of the third light guide section 4c does not need to be inclined and the third reflecting surface 14a can also be partially provided at a place where some of the first light L1 is desired to be reflected. In addition, the shape of the third reflecting surface 14a can be appropriately changed such as a curved shape as well as a flat surface.

In addition, the third light guide section 4c reflects the second light L2 incident on a surface opposite to a surface to which the second light guide section 4b is connected (in the embodiment, a lower surface) (hereinafter, referred to as a fourth reflecting surface) 14b toward the first light emitting surface 12a. For this reason, the fourth reflecting surface 14b is provided to be inclined diagonally downward.

Further, the entire lower surface of the third light guide section 4c does not need to be inclined and the fourth reflecting surface 14b can also be partially provided at a place where some of the second light L2 is desired to be reflected. In addition, the shape of the fourth reflecting surface 14b can be appropriately changed such as a curved shape as well as a flat surface.

At the emitting sections 12, as shown in FIG. 6 and FIG. 8(A), the first light L1 as a main light distribution is emitted forward from the first light emitting surface 12a, and the first light L1 as a subsidiary light distribution is emitted diagonally downward from the second light emitting surface 12b.

That is, in the emitting sections 12, an emission angle θ2 of the first light L1 with respect to the first light emitting surface 12a is greater than an incident angle θ1 of the first light L1 with respect to the first light emitting surface 12a. For this reason, the first light L1 incident on the first light emitting surface 12a which is inclined diagonally upward is emitted forward from the first light emitting surface 12a while being refracted upward. In addition, the first light L1 emitted forward from the first light emitting surface 12a is emitted toward a main light emission cover section 8a of the lens cover 8, which will be described below.

Meanwhile, at the emitting sections 12, the emission angle θ2 of the first light L1 with respect to the second light emitting surface 12b is greater than the incident angle θ1 of the first light L1 with respect to the second light emitting surface 12b. For this reason, the first light L1 incident on the second light emitting surface 12b which is inclined diagonally downward is emitted diagonally downward from the first light emitting surface 12a while being refracted downward.

In addition, at the emitting sections 12, as shown in FIG. 7 and FIG. 8(B), the second light L2 as a main light distribution is emitted forward from the second light emitting surface 12b, and the second light L2 as a subsidiary light distribution is emitted diagonally upward from the first light emitting surface 12a.

That is, at the emitting sections 12, the emission angle θ2 of the second light L2 with respect to the first light emitting surface 12a is greater than the incident angle Θ1 of the second light L2 with respect to the first light emitting surface 12a. For this reason, the second light L2 incident on the first light emitting surface 12a which is inclined diagonally upward is emitted diagonally upward from the first light emitting surface 12a while being refracted upward.

Meanwhile, at the emitting sections 12, the emission angle θ2 of the first light L1 with respect to the second light emitting surface 12b is greater than the incident angle θ1 of the second light L2 with respect to the second light emitting surface 12b. For this reason, the second light L2 incident on the second light emitting surface 12b which is inclined diagonally downward is emitted forward from the second light emitting surface 12b while being refracted downward.

As shown in FIG. 6, the reflecting member 5 is constituted by a reflecting member having light diffusivity such as a white glass epoxy resin or the like, a reflecting member on which a reflective film such as an aluminum thin film or the like is provided, or the like. The reflecting member 5 is disposed along a front side of the second light emitting surface 12b and a side of the second light emitting surface 12b (in the embodiment, a downward side).

Accordingly, the reflecting member 5 has a fifth reflecting surface 5a on an upper surface, and reflects the first light L1 which is incident from the second light emitting surface 12b toward a front side of the first light emitting surface 12a and toward a side of the first light emitting surface 12a (in the embodiment, an upward side) by the fifth reflecting surface 5a. In addition, the reflecting member 5 reflects the first light L1 which is incident on the fifth reflecting surface 5a toward a subsidiary light emission cover section 8b of the lens cover 8, which will be described below.

The lens body 6 is formed of a transparent resin such as polycarbonate, acryl, or the like, or a light transmissive member such as glass or the like. The lens body 6 is disposed to cover a forward side and a diagonally upward side of the third light guide section 4c.

The lens body 6 has a main light emitting section 6a disposed in front of the third light guide section 4c, and a subsidiary light emitting section 6b disposed diagonally above the third light guide section 4c. The main light emitting section 6a emits light relatively stronger than the subsidiary light emitting section 6b by transmitting the first light L1 and the second light L2, which are the main light distribution, forward. Meanwhile, the subsidiary light emitting section 6b emits light relatively weaker than the main light emitting section 6a by transmitting the first light L1 and the second light L2, which are the subsidiary light distribution, diagonally upward.

In addition, the lens cover 8, which is an outer lens, has the main light emission cover section 8a disposed in front of the main light emitting section 6a, and the subsidiary light emission cover section 8b disposed diagonally above the subsidiary light emitting section 6b, in accordance with a shape of the lens body 6, which is an inner lens.

The main light emission cover section 8a forms a main light emission region E1 that emits light with the first light L1 and the second light L2, which are the main light distributions that have passed through the main light emitting section 6a. Meanwhile, the subsidiary light emission cover section 8b forms a subsidiary light emission region E2 that emits light with the first light L1 and the second light L2, which are the subsidiary light distribution that have passed through the subsidiary light emitting section 6b.

In the vehicle lamp 1 of the embodiment having the above-mentioned configuration, as shown in FIG. 6, when the first light source 3A is turned on, it is possible to cause the main light emission region E1 to emit light with a relatively bright orange light and to cause the subsidiary light emission region E2 to emit light with a relatively dark orange light, as the turn lamp TRL shown in FIG. 1 and FIG. 2.

In addition, in the vehicle lamp 1 of the embodiment, as shown in FIG. 8, when the second light source 3B is turned on, it is possible to cause the main light emission region E1 to emit light in a relatively bright red light and to cause the subsidiary light emission region E2 to emit light in a relatively dark red light, as the tail lamp TLL shown in FIG. 1 and FIG. 2.

In the vehicle lamp 1 of the embodiment, since the above-mentioned second reflecting surface 13b is disposed at the corner between the back surface and the lower surface of the third light guide section 4c, it does not interfere the optical path of the first light L1 guided from the first light guide section 4a, which is disposed above the second reflecting surface 13b, toward the third light guide section 4c.

That is, the second reflecting surface 13b is disposed below the optical path of the first light L1 guided from the first light guide section 4a toward the third light guide section 4c. Accordingly, the first light L1 and the second light L2 can be efficiently guided toward the emitting sections 12.

In addition, in the vehicle lamp 1 of the embodiment, an inclination angle of the second reflecting surface 13b can be arbitrarily adjusted without exerting a bad influence with respect to the first light L1 guided from the first light guide section 4a toward the third light guide section 4c.

Specifically, an inclination angle of the second reflecting surface 13b can be arbitrarily adjusted such that the second light L2 entered into the third light guide section 4c from a position different from the first light L1 is emitted in the same direction as the first light L1 emitted from the emitting sections 12 (the main light emitting section 6a and the subsidiary light emitting section 6b of the lens body 6).

Accordingly, in the vehicle lamp 1 of the embodiment, appearance of light emission when the light guiding body 4 is illuminated by the first light L1 and the second light L2 incident from different positions of the light guiding body 4 can be improved.

In addition, in the vehicle lamp 1 of the embodiment, after the first light L1 reflected by the third reflecting surface 14a is emitted from the first light emitting surface 12a, the first light L1 is reflected from the fifth reflecting surface 5a of the reflecting member 5 toward the subsidiary light emitting section 6b of the lens body 6. Accordingly, the first light L1 can be emitted from the subsidiary light emitting section 6b while being greatly diffused in the upward/downward direction, and it is possible to respond sufficiently even when the subsidiary light emission region E2 is expanded.

In addition, in the vehicle lamp 1 of the embodiment, the second light L2 reflected by the fourth reflecting surface 14b is emitted from the first light emitting surface 12a toward the subsidiary light emitting section 6b of the lens body 6. Accordingly, the second light L2 can be emitted from the subsidiary light emitting section 6b while being greatly diffused in the upward/downward direction, and it is possible to sufficiently deal with the diffusion even when the subsidiary light emission region E2 is expanded.

In addition, in the vehicle lamp 1 of the embodiment, since the plurality of first light sources 3A located on a downward side and the plurality of second light sources 3B located on an upward side can be arranged side by side in the widthwise direction of the light guiding body 4, a width of the light guiding body 4 can be designed compactly, and a degree of design freedom of the light guiding body 4 can be increased.

In addition, in the vehicle lamp 1 of the embodiment, since an interval of the plurality of first light sources 3A and an interval of the plurality of second light sources 3B arranged side by side in the widthwise direction of the light guiding body 4 can be reduced, uniform emission with less color irregularity can be performed.

Further, the present invention is not particularly limited to the embodiment, and various modifications may be added without departing from the scope of the present invention, which is defined by the appended claims.

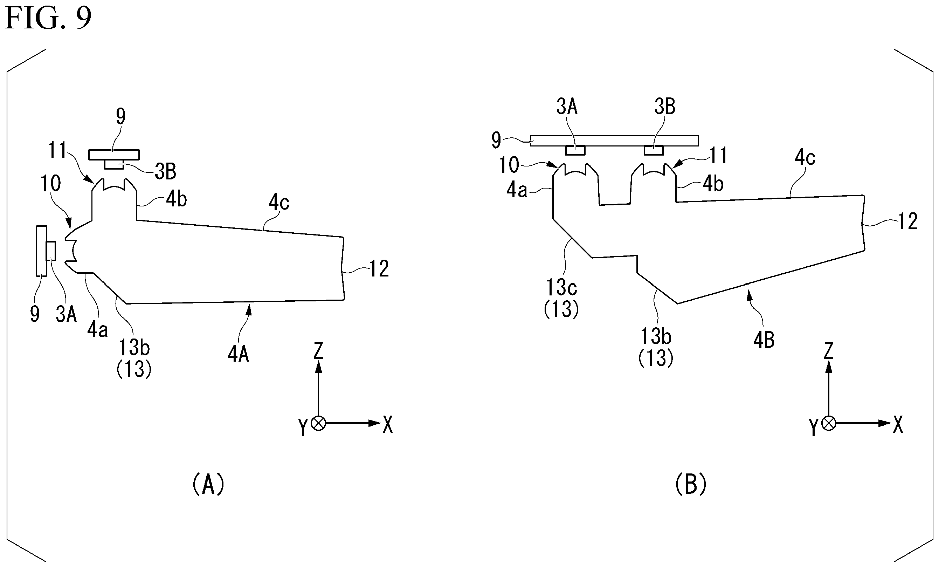

For example, like the light guiding body 4A shown in FIG. 9(A), in a state in which the first reflecting surface 13a is omitted, a configuration in which the second light guide section 4b is connected to an upper surface of the third light guide section 4c may be provided. In addition, the first light source 3A and the second light source 3B are mounted on different circuit boards 9.

In the case of the configuration, the second light L2 is emitted from the second light source 3B which is disposed on an upper section toward the second incidence sections 11 located on a downward side, and the second light L2 incident into the second light guide section 4b from the second incidence sections 11 is reflected toward the front of the third light guide section 4c by the second reflecting surface 13b.

In addition, like the light guiding body 4B shown in FIG. 9(B), in addition to the configuration of the light guiding body 4A, a configuration in which the first light source 3A and the second light source 3B disposed on the upper section are mounted on the same circuit board 9 may be provided. In addition, as the reflecting section 13, a sixth reflecting surface 13c configured to reflect the first light L1 which has entered into the first light guide section 4a from the first incidence sections 10 toward the third light guide section 4c on a forward side is provided.

In the case of the configuration, the first light L1 is emitted from the first light source 3A disposed on the upper section toward the first incidence sections 10 located on a downward side, and the first light L1 entered into the first light guide section 4a from the first incidence sections 10 is reflected toward the front of the third light guide section 4c by the sixth reflecting surface 13c.

In addition, in the vehicle lamp 1, the orientation in which the light guide bodies 4, 4A and 4B are disposed can be appropriately changed. For example, it is possible to arrange the light guide bodies 4, 4A and 4B upside down.

In addition, in the vehicle lamp 1, the case in which the light guide bodies 4, 4A and 4B are used has been exemplified, and shapes or the like of the light guide bodies 4, 4A and 4B can be appropriately changed according to a design or the like of the vehicle in actuality.

In addition, in the vehicle lamp 1, while the first light L1 emitted from the first light source 3a is orange light and the second light L2 emitted from the second light source 3b is red light, the first light L1 emitted from the first light source 3a may be red light and the second light L2 emitted from the second light source 3b may be orange light.

Further, in the embodiment, as the vehicle lamp 1 mounted on both corner sections on the side of the rear end of the vehicle, while the case in which the present invention is applied to a combined tail and turn lamp of the tail lamp TLL and the turn lamp TRL has been exemplified, for example, as the vehicle lamps mounted on both corner sections on the side of the front end of the vehicle, the present invention can also be applied to a combined position and turn lamp in which a position lamp configured to emit white light and a turn lamp configured to blink emission of orange light.

Further, according to regulations of each country, during blinking (lighting) of the turn lamp, it is possible to maintain turn on of the tail lamp or the position lamp or to maintain turn off of the tail lamp or the position lamp.

In addition, while the case in which the first light source 3A and the second light source 3B with different colored light are used has been exemplified in the embodiment, the present invention can also be applied to the vehicle lamp using the first light source and the second light source with the same colored light. Even in this case, it is possible to switch between turning on only one of the first light source and the second light source and turning on both thereof.

In the vehicle lamp to which the present invention is applicable, when the first light source and the second light source with the same colored light are used, for example, the present invention can be widely applied to a vehicle lamp such as a head light for a vehicle (a head lamp), a width indicator (a position lamp), a subsidiary head light (a subsidiary head lamp), a front section (a rear section) fog light (a fog lamp), a daytime running lamp (DRL), a lid lamp, a taillight (a tail lamp), a brake lamp (a stop lamp), a back lamp, a direction indicator (a winker lamp), or the like. In addition, colors of the first light and the second light emitted from the first light source and the second light source can also be appropriately changed according to uses thereof, for example, white light, red light, orange light, or the like.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A vehicle lamp comprising:
a first light source (3A) configured to emit first light (L1);
a second light source (3B) configured to emit second light (L2);
a light guiding body (4, 4A, 4B) configured to guide the first light (L1) and the second light (L2), and
a lens body (6) disposed in front of the light guide body (4, 4A, 4B),
wherein the light guiding body (4, 4A, 4B) comprises:
a first light guide section (4a) disposed on a side closer to the first light source;
a second light guide section (4b) disposed on a side closer to the second light source;
a third light guide section (4c) to which the first light guide section (4a) and the second light guide section (4b) are connected;
a first incidence section (10) that is located at a side of the first light guide section (4a) which faces the first light source (3A) and that is configured to cause the first light (L1) to enter inside of the first light guide section (4a);
a second incidence section (11) that is located at a side of the second light guide section (4b) which faces the second light source (3B) and that is configured to cause the second light (L2) to enter inside of the second light guide section (4b);
a reflecting section (13) configured to reflect at least one or both of the first light (L1) guided inside of the first light guide section (4a) and the second light (L2) guided inside of the second light guide section (4b) toward the third light guide section (4c); and
an emitting section (12) that is located at a side of the third light guide section (4c) which is opposite to a side of the third light guide section (4c) to which the first light guide section (4a) and the second light guide section (4b) are connected and that is configured to emit the first light (L1) and the second light (L2) to an outside of the third light guide section (4c),
wherein the first light guide section (4a) is connected to a rear side of the third light guide section (4c),
wherein the second light guide section (4b) is connected to a lateral side of the third light guide section (4c),
wherein the third light guide section (4c) is provided to protrude forward from a position where the first light guide section (4a) and the second light guide section (4b) are connected,
wherein the reflecting section (13) comprises a reflecting surface (13b) that is located at a side of the third light guide section (4c) which is opposite to a position where the second light guide section (4b) is connected with the third light guide section (4c) and that is configured to reflect the second light (L2) toward the emitting section (12) at front,
**characterized in that**
the emitting section (12) comprises a first light emitting surface (12a) and a second light emitting surface (12b) that are disposed adjacent with each other while having a boundary line (S) interposed between the first light emitting surface (12a) and the second light emitting surface (12b), the boundary line (S) being located between the first light (L1) and the second light (L2) that are guided inside of the third light guide section (4c), and the first light emitting surface (12a) and the second light emitting surface (12b) are provided to be inclined toward the front with respect to the boundary line (S) in opposite directions with each other,
wherein the lens body (6) is disposed in front of the third light guide section (4c),
wherein the lens body (6) comprises:
a main light emitting section (6a); and
a subsidiary light emitting section (6b) configured to emit light relatively weaker than that of the main light emitting section,
wherein the first light (L1) is emitted from the first light emitting surface (12a) toward the main light emitting section (6a) of the lens body (6) as a main light distribution and is emitted from the second light emitting surface (12b) in a direction different from the main light distribution as a subsidiary light distribution,
wherein the second light (L2) is emitted from the second light emitting surface (12b) toward the main light emitting section (6a) of the lens body (6) as a main light distribution and is emitted from the first light emitting surface (12a) in a direction different from the main light distribution as a subsidiary light distribution, and
wherein the subsidiary light emitting section (6b) emits the first light (L1) which is emitted from the second light emitting surface (12b) as the subsidiary light distribution and emits the second light (L2) which is emitted from the first light emitting surface (12a) as the subsidiary light distribution.

2. The vehicle lamp according to claim 1,
wherein the reflecting surface (13b) is provided at a corner between a surface of the third light guide section (4c) to which the first light guide section (4a) is connected and a surface of the third light guide section (4c) which is a surface opposite to a surface to which the second light guide section (4b) is connected.

3. The vehicle lamp according to claim 1 or 2, comprising a reflecting member (5) disposed along a front of the second light emitting surface (12b) and a lateral side of the second light emitting surface (12b),
wherein the reflecting member (5) is configured to reflect the first light (L1) emitted from the second light emitting surface (12b) toward the subsidiary light emitting section (6b).

4. The vehicle lamp according to any one of claims 1 to 3,
wherein the boundary line (S) extends in a widthwise direction of the emitting section (12), and
wherein the first light emitting surface (12a) and the second light emitting surface (12b) constitute a V-shaped groove section using the boundary line (S) as a bottom section.

5. The vehicle lamp according to any one of claims 1 to 4,
wherein a surface of the third light guide section (4c) to which the second light guide section (4b) is connected comprises a reflecting surface (14a) configured to reflect the first light (L1) toward the first light emitting surface (12a).

6. The vehicle lamp according to any one of claims 1 to 5, wherein the third light guide section (4c) comprises a reflecting surface (14b) configured to reflect the second light (L2), which incident on a surface opposite to the surface to which the second light guide section (4b) is connected, toward the first light emitting surface (12a).

7. The vehicle lamp according to any one of claims 1 to 6,
wherein the first light source (3A) and the second light source (3B) are mounted on a same board (9).

8. The vehicle lamp according to claim 7,
wherein the reflecting section (13) comprises a reflecting surface (10c) that is disposed at the first light guide section (4a) and that is configured to reflect the first light (L1) entered from the first incidence section (10) toward a connecting position between the third light guide section (4c) and the reflecting surface (10c).

9. The vehicle lamp according to claim 7,
wherein the reflecting section (13) comprises a reflecting surface (11c) that is disposed at the second light guide section (4b) and that is configured to reflect the second light (L2) entered from the second incidence section (11) toward a connecting position between the third light guide section (4c) and the reflecting surface (11c).

10. The vehicle lamp according to any one of claims 1 to 6,
wherein the first light source (3A) and the second light source (3B) are mounted on different boards (9).

11. The vehicle lamp according to any one of claims 1 to 10,
wherein the plurality of first light sources (3A) are arranged side by side and the plurality of second light sources (3B) are arranged side by side,
the first light guide section (4a), the second light guide section (4b) and the third light guide section (4c) are provided to extend in a direction in which the first light sources (3A) and the second light sources (3B) are arranged side by side, and
a plurality of first incidence sections (10) are arranged side by side, a plurality of second incidence sections (11) are arranged side by side and a plurality of emitting sections (12) are arranged side by side, so as to correspond with each of the first light sources (3A) and the second light sources (3B).

12. The vehicle lamp according to any one of claims 1 to 11,
wherein the first light source (3A) and the second light source (3B) are configured to emit the first light (L1) and the second light (L2) in different colors.

## Patentansprüche

1. Fahrzeuglampe, die Folgendes aufweist:
eine erste Lichtquelle (3A), die zum Emittieren eines ersten Lichtes (L1) konfiguriert ist;
eine zweite Lichtquelle (3B), die zum Emittieren eines zweiten Lichtes (L2) konfiguriert ist;
einen Lichtführungskörper (4, 4A, 4B), der zum Führen des ersten Lichtes (L1) und des zweiten Lichtes (L2) konfiguriert ist, und einen Linsenkörper (6), der vor dem Lichtführungskörper (4, 4A, 4B) angeordnet ist,
wobei der Lichtführungskörper (4, 4A, 4B) Folgendes aufweist:
einen ersten Lichtführungsabschnitt (4a), der an einer Seite näher an der ersten Lichtquelle angeordnet ist;
einen zweiten Lichtführungsabschnitt (4b), der an einer Seite näher an der zweiten Lichtquelle angeordnet ist;
einen dritten Lichtführungsabschnitt (4c), mit welchem der erste Lichtführungsabschnitt (4a) und der zweite Lichtführungsabschnitt (4b) verbunden sind;
einen ersten Eintritts- bzw. Einfallsabschnitt (10), der an einer Seite des ersten Lichtführungsabschnittes (4a) angeordnet ist, der zu der ersten Lichtquelle (3A) weist, und der konfiguriert ist, um zu bewirken, dass das erste Licht (L1) in den ersten Lichtführungsabschnitt (4a) eintritt;
einen zweiten Lichteintritts- bzw. Lichteinfallsabschnitt (11), der an einer Seite des zweiten Lichtführungsabschnittes (4b) angeordnet ist, der zu der zweiten Lichtquelle (3B) weist, und der konfiguriert ist, um zu bewirken, dass das zweite Licht (L2) in den zweiten Lichtführungsabschnitt (4b) eintritt;
einen reflektierenden Abschnitt (13), der konfiguriert ist, um das erste Licht (L1), welches in den ersten Lichtführungsabschnitt (4a) geführt wird, und/oder das zweite Licht (L2), welches innerhalb des zweiten Lichtführungsabschnittes (4b) geführt wird, zu dem dritten Lichtführungsabschnitt (4c) zu reflektieren; und
einen Emissionsabschnitt (12), der an einer Seite des dritten Lichtführungsabschnittes (4c) angeordnet ist, der entgegengesetzt zu einer Seite des dritten Lichtführungsabschnittes (4c) ist, mit dem der erste Lichtführungsabschnitt (4a) und der zweite Lichtführungsabschnitt (4b) verbunden sind, und der konfiguriert ist, um das erste Licht (L1) und das zweite Licht (L2) zu einer Außenseite des dritten Lichtführungsabschnittes (4c) zu emittieren,
wobei der erste Lichtführungsabschnitt (4a) mit einer hinteren Seite des dritten Lichtführungsabschnittes (4c) verbunden ist,
wobei der zweite Lichtführungsabschnitt (4b) mit einer seitlichen Seite des dritten Lichtführungsabschnittes (4c) verbunden ist,
wobei der dritte Lichtführungsabschnitt (4c) so vorgesehen ist, dass er von einer Position, wo der erste Lichtführungsabschnitt (4a) und der zweite Lichtführungsabschnitt (4b) verbunden sind, nach vorne vorsteht,
wobei der reflektierende Abschnitt (13) eine reflektierende Oberfläche (13b) aufweist, die an einer Seite des dritten Lichtführungsabschnittes (4c) angeordnet ist, die entgegengesetzt zu einer Position ist, wo der zweite Lichtführungsabschnitt (4b) mit dem dritten Lichtführungsabschnitt (4c) verbunden ist, und der konfiguriert ist, um das zweite Licht (L2) zu dem Emissionsabschnitt (12) am Vorderteil zu emittieren,
**dadurch gekennzeichnet, dass**
der Emissionsabschnitt (12) eine erste lichtemittierende Oberfläche (12a) und eine zweite lichtemittierende Oberfläche (12b) aufweist, die benachbart zueinander angeordnet sind, während sie eine Grenzlinie (S) haben, die zwischen der ersten lichtemittierenden Oberfläche (12a) und der zweiten lichtemittierenden Oberfläche (12b) angeordnet ist,
wobei die Grenzlinie (S) zwischen dem ersten Licht (L1) und dem zweiten Licht (L2) angeordnet ist, die in den dritten Lichtführungsabschnitt (4c) geführt werden, und wobei die erste lichtemittierende Oberfläche (12a) und die zweite lichtemittierende Oberfläche (12b) so vorgesehen sind, dass sie nach vorne bezüglich der Grenzlinie (S) in entgegengesetzten Richtungen zueinander geneigt sind,
wobei der Linsenkörper (6) vor dem dritten Lichtführungsabschnitt (4c) angeordnet ist,
wobei der Linsenkörper (6) Folgendes aufweist:
einen Hauptlichtemissionsabschnitt (6a); und
einen Hilfslichtemissionsabschnitt (6b), der konfiguriert ist, um Licht relativ schwächer zu emittieren als jenes des Hauptlichtemissionsabschnittes,
wobei das erste Licht (L1) von der ersten lichtemittierenden Oberfläche (12a) zu dem Hauptlichtemissionsabschnitt (6a) des Linsenkörpers (6) als eine Hauptlichtverteilung emittiert wird, und von der zweiten lichtemittierenden Oberfläche (12b) in einer anderen Richtung als die Hauptlichtverteilung als eine Hilfslichtverteilung emittiert wird,
wobei das zweite Licht (L2) von der zweiten lichtemittierenden Oberfläche (12b) zu dem Hauptlichtemissionsabschnitt (6a) des Linsenkörpers (6) als eine Hauptlichtverteilung emittiert wird, und von der ersten lichtemittierenden Oberfläche (12a) in einer anderen Richtung als die Hauptlichtverteilung als eine Hilfslichtverteilung emittiert wird, und
wobei der Hilfslichtemissionsabschnitt (6b) das erste Licht (L1),
welches von der zweiten lichtemittierenden Oberfläche (12b) emittiert wird, als die Hilfslichtverteilung emittiert, und das zweite Licht (L2),
welches von der ersten lichtemittierenden Oberfläche (12a) emittiert wird, als die Hilfslichtverteilung emittiert.

2. Fahrzeuglampe nach Anspruch 1,
wobei die reflektierende Oberfläche (13b) an einer Ecke zwischen einer Oberfläche des dritten Lichtführungsabschnittes (4c), mit dem der erste Lichtführungsabschnitt (4a) verbunden ist, und einer Oberfläche des dritten Lichtführungsabschnittes (4c) vorgesehen ist, die eine Oberfläche entgegengesetzt zu einer Oberfläche ist, mit der der zweite Lichtführungsabschnitt (4b) verbunden ist.

3. Fahrzeuglampe nach Anspruch 1 oder 2, die ein Reflexionselement (5) aufweist, das entlang einer Front der zweiten lichtemittierenden Oberfläche (12b) und einer seitlichen Seite der lichtemittierenden Oberfläche (12b) angeordnet ist,
wobei das reflektierende Element (5) konfiguriert ist, um das erste Licht (L1), welches von der zweiten lichtemittierenden Oberfläche (12b) emittiert wird, zu dem Hilfslichtemissionsabschnitt (6b) zu reflektieren.

4. Fahrzeuglampe nach einem der Ansprüche 1 bis 3,
wobei die Grenzlinie (S) sich in einer Breitenrichtung des Emissionsabschnittes (12) erstreckt, und
wobei die erste lichtemittierende Oberfläche (12a) und die zweite lichtemittierende Oberfläche (12b) einen V-förmigen Nutenabschnitt unter Verwendung der Grenzlinie (S) als Bodenabschnitt bilden.

5. Fahrzeuglampe nach einem der Ansprüche 1 bis 4,
wobei eine Oberfläche des dritten Lichtführungsabschnittes (4c) mit dem der zweite Lichtführungsabschnitt (4b) verbunden ist, eine reflektierende Oberfläche (14a) aufweist, die konfiguriert ist, um das erste Licht (L1) zu der ersten lichtemittierenden Oberfläche (12a) zu reflektieren.

6. Fahrzeuglampe nach einem der Ansprüche 1 bis 5,
wobei der dritte Lichtführungsabschnitt (4c) eine reflektierende Oberfläche (14b) aufweist, die konfiguriert ist, um das zweite Licht (L2), welches auf einer Oberfläche entgegengesetzt zu der Oberfläche auftrifft, mit der der zweite Lichtführungsabschnitt (4b) verbunden ist, zu der ersten lichtemittierenden Oberfläche (12a) zu reflektieren.

7. Fahrzeuglampe nach einem der Ansprüche 1 bis 6,
wobei die erste Lichtquelle (3A) und die zweite Lichtquelle (3B) auf einer gleichen Platte bzw. Platine (9) montiert sind.

8. Fahrzeuglampe nach Anspruch 7,
wobei der reflektierende Abschnitt (13) eine reflektierende Oberfläche (10c) aufweist, die an dem ersten Lichtführungsabschnitt (4a) angeordnet ist, und die konfiguriert ist zum Reflektieren des ersten Lichtes (L1), welches von dem ersten Einfallsabschnitt (10) eingetreten ist, zu einer Verbindungsposition zwischen dem dritten Lichtführungsabschnitt (4c) und der reflektierenden Oberfläche (10c).

9. Fahrzeuglampe nach Anspruch 7,
wobei der reflektierende Abschnitt (13) eine reflektierende Oberfläche (11c) aufweist, die an dem zweiten Lichtführungsabschnitt (4b) angeordnet ist, und die konfiguriert ist zum Reflektieren des zweiten Lichtes (L2), welches von dem zweiten Einfallsabschnitt (11) eingetreten ist, zu einer Verbindungsposition zwischen dem dritten Lichtführungsabschnitt (4c) und der reflektierenden Oberfläche (11c).

10. Fahrzeuglampe nach einem der Ansprüche 1 bis 6, wobei die erste Lichtquelle (3A) und die zweite Lichtquelle (3B) auf unterschiedlichen Platten bzw. Platinen (9) montiert sind.

11. Fahrzeuglampe nach einem der Ansprüche 1 bis 10,
wobei die Vielzahl von ersten Lichtquellen (3A) Seite an Seite angeordnet ist bzw. sind, und wobei die Vielzahl von zweiten Lichtquellen (3B) Seite an Seite angeordnet ist bzw. sind,
wobei der erste Lichtführungsabschnitt (4a), der zweite Lichtführungsabschnitt (4b) und der dritte Lichtführungsabschnitt (4c) so vorgesehen sind, dass sie sich in einer Richtung erstrecken, in welcher die ersten Lichtquellen (3A) und die zweiten Lichtquellen (3B) Seite an Seite angeordnet sind, und
wobei eine Vielzahl der ersten Einfallabschnitte (10) Seite an Seite angeordnet ist bzw. sind, wobei eine Vielzahl von zweiten Einfallsabschnitten (11) Seite an Seite angeordnet ist, und wobei eine Vielzahl von Emissionsabschnitten (12) Seite an Seite angeordnet ist, so dass wie in Übereinstimmung mit jeder der ersten Lichtquellen (3A) und der zweiten Lichtquellen (3B) sind.

12. Fahrzeuglampe nach einem der Ansprüche 1 bis 11,
wobei die erste Lichtquelle (3A) und die zweite Lichtquelle (3B) konfiguriert sind, um das erste Licht (L1) und das zweite Licht (L2) in unterschiedlichen Farben zu emittieren.

## Revendications

1. Phare de véhicule comprenant :
une première source de lumière (3A) configurée pour émettre une première lumière (L1) ;
une deuxième source de lumière (3B) configurée pour émettre une deuxième lumière (L2) ;
un corps de guidage de lumière (4, 4A, 4B) configuré pour guider la première lumière (L1) et la deuxième lumière (L2), et
un corps de lentille (6) disposé à l'avant du corps de guidage de lumière (4, 4A, 4B),
dans lequel le corps de guidage de lumière (4, 4A, 4B) comprend :
une première section guide de lumière (4a) disposée sur un côté plus proche de la première source de lumière ;
une deuxième section guide de lumière (4b) disposée sur un côté plus proche de la deuxième source de lumière ;
une troisième section guide de lumière (4c) à laquelle la première section guide de lumière (4a) et la deuxième section guide de lumière (4b) sont connectées ;
une première section d'incidence (10) qui est située d'un côté de la première section guide de lumière (4a) qui fait face à la première source de lumière (3A) et qui est configurée pour amener la première lumière (L1) à entrer à l'intérieur de la première section guide de lumière (4a) ;
une deuxième section d'incidence (11) qui est située d'un côté de la deuxième section guide de lumière (4b) qui fait face à la deuxième source de lumière (3B) et qui est configurée pour amener la deuxième lumière (L2) à entrer à l'intérieur de la deuxième section guide de lumière (4b) ;
une section réfléchissante (13) configurée pour réfléchir au moins une ou les deux parmi la première lumière (L1) guidée à l'intérieur de la première section guide de lumière (4a) et la deuxième lumière (L2) guidée à l'intérieur de la deuxième section guide de lumière (4b) vers la troisième section guide de lumière (4c) ; et
une section d'émission (12) qui est située d'un côté de la troisième section guide de lumière (4c) qui est opposé à un côté de la troisième section guide de lumière (4c) auquel la première section guide de lumière (4a) et la deuxième section guide de lumière (4b) sont connectées et qui est configurée pour émettre la première lumière (L1) et la deuxième lumière (L2) vers l'extérieur de la troisième section guide de lumière (4c),
dans lequel la première section guide de lumière (4a) est connectée à un côté arrière de la troisième section guide de lumière (4c),
dans lequel la deuxième section guide de lumière (4b) est connectée à un côté latéral de la troisième section guide de lumière (4c),
dans lequel la troisième section guide de lumière (4c) est prévue pour saillir vers l'avant depuis une position où la première section guide de lumière (4a) et la deuxième section guide de lumière (4b) sont connectées,
dans lequel la section réfléchissante (13) comprend une surface réfléchissante (13b) qui est située d'un côté de la troisième section guide de lumière (4c) qui est opposé à une position où la deuxième section guide de lumière (4b) est connectée à la troisième section guide de lumière (4c) et qui est configurée pour réfléchir la deuxième lumière (L2) vers la section d'émission (12) à l'avant,
**caractérisé en ce que**
la section d'émission (12) comprend une première surface d'émission de lumière (12a) et une deuxième surface d'émission de lumière (12b) qui sont disposées adjacentes l'une à l'autre tout en ayant une ligne frontière (S) interposée entre la première surface d'émission de lumière (12a) et la deuxième surface d'émission de lumière (12b), la ligne frontière (S) étant située entre la première lumière (L1) et la deuxième lumière (L2) qui sont guidées à l'intérieur de la troisième section guide de lumière (4c), et la première surface d'émission de lumière (12a) et la deuxième surface d'émission de lumière (12b) sont prévues pour être inclinées vers l'avant par rapport à la ligne frontière (S) dans des directions opposées l'une à l'autre,
dans lequel le corps de lentille (6) disposé à l'avant de la troisième section guide de lumière (4c),
dans lequel le corps de lentille (6) comprend :
une section d'émission de lumière principale (6a) ; et
une section d'émission de lumière subsidiaire (6b) configurée pour émettre une lumière relativement plus faible que celle de la section d'émission de lumière principale,
dans lequel la première lumière (L1) est émise par la première surface d'émission de lumière (12a) vers la section d'émission de lumière principale (6a) du corps de lentille (6) en tant que distribution de lumière principale et est émise par la deuxième surface d'émission de lumière (12b) dans une direction différente de la distribution de lumière principale en tant que distribution de lumière subsidiaire,
dans lequel la deuxième lumière (L2) est émise par la deuxième surface d'émission de lumière (12b) vers la section d'émission de lumière principale (6a) du corps de lentille (6) en tant que distribution de lumière principale et est émise par la première surface d'émission de lumière (12a) dans une direction différente de la distribution de lumière principale en tant que distribution de lumière subsidiaire, et
dans lequel la section d'émission de lumière subsidiaire (6b) émet la première lumière (L1) qui est émise par la deuxième surface d'émission de lumière (12b) en tant que distribution de lumière subsidiaire et émet la deuxième lumière (L2) qui est émise par la première surface d'émission de lumière (12a) en tant que distribution de lumière subsidiaire.

2. Phare de véhicule selon la revendication 1,
dans lequel la surface réfléchissante (13b) est prévue au niveau d'un coin entre une surface de la troisième section guide de lumière (4c) à laquelle la première section guide de lumière (4a) est connectée et une surface de la troisième section guide de lumière (4c) qui est une surface opposée à une surface à laquelle la deuxième section guide de lumière (4b) est connectée.

3. Phare de véhicule selon la revendication 1 ou 2, comprenant un élément réfléchissant (5) disposé le long de l'avant de la deuxième surface d'émission de lumière (12b) et d'un côté latéral de la deuxième surface d'émission de la lumière (12b),
dans lequel l'élément réfléchissant (5) est configuré pour réfléchir la première lumière (L1) émise par la deuxième surface d'émission de lumière (12b) vers la section d'émission de lumière subsidiaire (6b).

4. Phare de véhicule selon l'une quelconque des revendications 1 à 3,
dans lequel la ligne frontière (S) s'étend dans une direction de largeur de la section d'émission (12), et
dans lequel la première surface d'émission de lumière (12a) et la deuxième surface d'émission de lumière (12b) constituent une section de rainure en forme de V en utilisant la ligne frontière (S) comme section basse.

5. Phare de véhicule selon l'une quelconque des revendications 1 à 4,
dans lequel une surface de la troisième section guide de lumière (4c) à laquelle la deuxième section guide de lumière (4b) est connectée comprend une surface réfléchissante (14a) configurée pour réfléchir la première lumière (L1) vers la première surface d'émission de lumière (12a).

6. Phare de véhicule selon l'une quelconque des revendications 1 à 5, dans lequel la troisième section guide de lumière (4c) comprend une surface réfléchissante (14b) configurée pour réfléchir la deuxième lumière (L2), qui est incidente sur une surface opposée à la surface à laquelle la deuxième section guide de lumière (4b) est connectée, vers la première surface d'émission de lumière (12a).

7. Phare de véhicule selon l'une quelconque des revendications 1 à 6,
dans lequel la première source de lumière (3A) et la deuxième source de lumière (3B) sont montées sur une même carte (9) .

8. Phare de véhicule selon la revendication 7,
dans lequel la section réfléchissante (13) comprend une surface réfléchissante (10c) qui est disposée au niveau de la première section guide de lumière (4a) et qui est configurée pour réfléchir la première lumière (L1) entrée depuis la première section d'incidence (10) vers une position de connexion entre la troisième section guide de lumière (4c) et la surface réfléchissante (10c).

9. Phare de véhicule selon la revendication 7,
dans lequel la section réfléchissante (13) comprend une surface réfléchissante (11c) qui est disposée au niveau de la deuxième section guide de lumière (4b) et qui est configurée pour réfléchir la deuxième lumière (L2) entrée depuis la deuxième section d'incidence (11) vers une position de connexion entre la troisième section guide de lumière (4c) et la surface réfléchissante (11c).

10. Phare de véhicule selon l'une quelconque des revendications 1 à 6,
dans lequel la première source de lumière (3A) et la deuxième source de lumière (3B) sont montées sur des cartes différentes (9).

11. Phare de véhicule selon l'une quelconque des revendications 1 à 10,
dans lequel la pluralité de premières sources de lumière (3A) sont agencées côte à côte et la pluralité de deuxièmes sources de lumière (3B) sont agencées côte à côte,
la première section guide de lumière (4a), la deuxième section guide de lumière (4b) et la troisième section guide de lumière (4c) sont prévues pour s'étendre dans une direction dans laquelle les premières sources de lumière (3A) et les deuxièmes sources de lumière (3B) sont agencées côte à côte, et
une pluralité de premières sections d'incidence (10) sont agencées côte à côte, une pluralité de deuxièmes sections d'incidence (11) sont agencées côte à côte et une pluralité de sections d'émission (12) sont agencées côte à côte, de sorte à correspondre à chacune des premières sources de lumière (3A) et des deuxièmes sources de lumière (3B).

12. Phare de véhicule selon l'une quelconque des revendications 1 à 11,
dans lequel la première source de lumière (3A) et la deuxième source de lumière (3B) sont configurées pour émettre la première lumière (L1) et la deuxième lumière (L2) dans des couleurs différentes.
